# EUROPEAN PATENT SPECIFICATION

(11) **EP 4 518 573 B1**
(45) Date of publication and mention of the grant of the patent: **03.06.2026**
(21) Application number: 24196939.3
(22) Date of filing: 28.08.2024
(51) Int. Cl.: H04W 84/18, H04W 4/80, H04W 76/14, H04W 76/15, H04W 76/30, H04W 88/04

(54) **RANGE EXTENDER FOR HOME AUTOMATION NETWORK**
RANGE EXTENDER FÜR EIN HEIMAUTOMATISIERUNGSNETZWERK
PROLONGATEUR D'AUTONOMIE POUR RÉSEAU DOMOTIQUE

(30) Priority: 29.08.2023 US 202318457997
(43) Date of publication of application: 05.03.2025
(73) Proprietor: Synaptics Incorporated, San Jose, CA 95131 (US)
(72) Inventor: BHAYARE, Prashant Kumar, San Jose, 95131 (US); R V, Vishwa Bharathi, San Jose, 95131 (US); KORI, Basavaraj Halappa, San Jose, 95131 (US)
(74) Representative: J A Kemp LLP

(56) References cited:
- "Digital Enhanced Cordless Telecommunications (DECT); Wireless Relay Station (WRS)", vol. DECT, no. V2.2.1, 10 December 2018 (2018-12-10), pages 1 - 103, XP014344108, Retrieved from the Internet <URL:http://www.etsi.org/deliver/etsi_en/300700_300799/300700/02.02.01_60/en_300700v020201p.pdf> [retrieved on 20181210]
- DSPG EDINBURGH LTD: "New draft of TS 102 939-1", 7 March 2017 (2017-03-07), pages 1 - 173, XP014288610, Retrieved from the Internet <URL:docbox.etsi.org\DECT\DECT\05-CONTRIBUTIONS\2017\DECT(17)000035_New_draft_of_TS_102_939-1.docx> [retrieved on 20170307]
- OVE: "Draft - REN/DECT-00353 v (EN 300 175-3 ) Base standard part 3 (1 to 8)", no. 2.8.2, 26 October 2021 (2021-10-26), pages 1 - 372, XP014411120, Retrieved from the Internet <URL:ftp://docbox.etsi.org/DECT/DECT/05-CONTRIBUTIONS/2021/DECT(21)000268_Draft_-_REN_DECT-00353__v__EN_300_175-3____Base_standard_par.zip DECT-00353v282.docx> [retrieved on 20211026]

## Description

### TECHNICAL FIELD

The present implementations relate generally to wireless communication, and specifically to range extenders for home automation networks.

### BACKGROUND OF RELATED ART

Digital enhanced cordless telecommunications (DECT) ultra low energy (ULE) is a wireless communication standard that can be used to implement home automation, security, and climate control in residential and enterprise environments. The basic building block of a ULE system is a home automation network (HAN) that includes a fixed part (FP) and at least one portable part (PP). A DECT ULE PP (also referred to as a "leaf") can be any portable device that is used in home automation, security, or climate control applications. Example suitable portable devices include sensors (such as smoke detectors or motion detectors), thermostats, and electricity control elements, among other examples. The DECT ULE FP (also referred to as the "root node") is a base station or access point that bridges a connection between the portable devices and a local network (or the Internet). The base station communicates with the portable devices over a DECT air interface. Each over-the-air (OTA) connection between the base station and a respective portable device is referred to as a wireless communication "link."

Existing versions of the DECT standard define a repeater (also referred to as a "wireless relay station") that can extend the range of the DECT air interface. However, DECT repeaters merely relay messages between a base station and a portable device. As such, the portable device must acquire an end-to-end link to communicate with the base station. In other words, the DECT repeater must maintain wireless communication links with the portable device and the base station, concurrently, to relay communications between them. The portable device repeatedly attempts to transmit the same message over the DECT air interface until an end-to-end link with the base station is established. Thus, using DECT repeaters to relay messages between a portable device and a base station often increases the power consumption of the portable device. Because the portable devices of a HAN are often powered by batteries, there is a need to increase the wireless communication range of a HAN without increasing the power consumption of the portable devices.

DECT; WRS is disclosed in "Digital Enhanced Cordless Telecommunications (DECT); Wireless Relay Station (WRS)", European Standard, European Telecommunications Standards Institute (Etsi), 650, Route Des Lucioles ; F-06921 Sophia-Anti Polis ; France Dect, V2.2.1 10 December 2018 (2018-12-10), pages 1 -103.

### SUMMARY

The invention is as claimed in the independent and dependent claims. This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter of this disclosure can be implemented in a method of wireless communication. The method includes receiving a first packet for a base station via a first link; releasing the first link responsive to receiving the first packet; transmitting the first packet to the base station via a second link; receiving confirmation of the first packet by the base station; and releasing the second link responsive to receiving the confirmation; wherein the first link is released prior to transmitting the first packet to the base station.

Another innovative aspect of the subject matter of this disclosure can be implemented in a wireless communication device, including a processing system and a memory. The memory stores instructions that, when executed by the processing system, cause the wireless communication device to receive a first packet for a base station via a first link; release the first link responsive to receiving the first packet; transmit the first packet to the base station via a second link; receive confirmation of the first packet by the base station; and release the second link responsive to receiving the confirmation; wherein the first link is released prior to transmitting the first packet to the base station.

### BRIEF DESCRIPTION OF THE DRAWINGS

The present implementations are illustrated by way of example and are not intended to be limited by the figures of the accompanying drawings.
FIG. 1 shows a block diagram of an example wireless communication network, according to some implementations.
FIG. 2 shows a block diagram of an example digital enhanced cordless telecommunications (DECT) ultra low energy (ULE) range extender, according to some implementations.
FIG. 3A shows a sequence diagram depicting an example process for device registration in a home automation network (HAN), according some implementations.
FIG. 3B shows a sequence diagram depicting an example uplink communication in a HAN, according to some implementations.
FIG. 3C shows a sequence diagram depicting an example downlink communication in a HAN, according to some implementations.
FIG. 4A shows another sequence diagram depicting an example process for device registration in a HAN, according to some implementations.
FIG. 4B shows another sequence diagram depicting an example uplink communication in a HAN, according to some implementations.
FIG. 4C shows another sequence diagram depicting an example downlink communication in a HAN, according to some implementations.
FIG. 5 shows a block diagram of an example wireless communication device, according to some implementations.
FIG. 6 shows an illustrative flowchart depicting an example operation for wireless communications, according to some implementations.

### DETAILED DESCRIPTION

In the following description, numerous specific details are set forth such as examples of specific components, circuits, and processes to provide a thorough understanding of the present disclosure. The term "coupled" as used herein means connected directly to or connected through one or more intervening components or circuits. The terms "electronic system" and "electronic device" may be used interchangeably to refer to any system capable of electronically processing information. Also, in the following description and for purposes of explanation, specific nomenclature is set forth to provide a thorough understanding of the aspects of the disclosure. However, it will be apparent to one skilled in the art that these specific details may not be required to practice the example embodiments. In other instances, well-known circuits and devices are shown in block diagram form to avoid obscuring the present disclosure. Some portions of the detailed descriptions which follow are presented in terms of procedures, logic blocks, processing and other symbolic representations of operations on data bits within a computer memory.

These descriptions and representations are the means used by those skilled in the data processing arts to most effectively convey the substance of their work to others skilled in the art. In the present disclosure, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system. It should be borne in mind, however, that all of these and similar terms are to be associated with the appropriate physical quantities and are merely convenient labels applied to these quantities.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, circuits, and steps have been described below generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Also, the example input devices may include components other than those shown, including well-known components such as a processor, memory and the like.

The techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium including instructions that, when executed, performs one or more of the methods described above. The non-transitory processor-readable data storage medium may form part of a computer program product, which may include packaging materials.

The non-transitory processor-readable storage medium may comprise random access memory (RAM) such as synchronous dynamic random-access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

The various illustrative logical blocks, modules, circuits and instructions described in connection with the embodiments disclosed herein may be executed by one or more processors (or a processing system). The term "processor," as used herein may refer to any general-purpose processor, special-purpose processor, conventional processor, controller, microcontroller, and/or state machine capable of executing scripts or instructions of one or more software programs stored in memory.

As described above, DECT ULE is a wireless communication standard that can be used to implement home automation, security, and climate control in residential and enterprise environments. Existing versions of the DECT standard define a repeater (also referred to as a "wireless relay station") that can extend the range of the DECT air interface. However, DECT repeaters merely relay messages between a base station and a portable device. As such, the portable device must acquire an end-to-end link to communicate with the base station. The portable device repeatedly attempts to transmit the same message over the DECT air interface until an end-to-end link with the base station is established. Thus, using DECT repeaters to relay messages between a portable device and a base station often increases the power consumption of the portable device. Aspects of the present disclosure recognize that the power consumption of portable devices can be reduced by eliminating the requirement for end-to-end links to support wireless communications in a HAN.

Various aspects relate generally to digital enhanced cordless telecommunications (DECT) ultra low energy (ULE) home automation networks (HANs), and more particularly, to range extenders that can extend the range of wireless communications in a HAN without increasing the power consumption of portable devices. In some aspects, a ULE range extender may include fixed part (FP) and portable part (PP) components. The FP component is configured to communicate with one or more portable devices, whereas the PP component is configured to communicate with a base station (or another range extender). In some implementations, the FP component may receive an uplink message from a portable device via a first link and may immediately release the first link in response to receiving the uplink message. For example, the uplink message may be an information packet intended for the base station. The PP component transmits the uplink message to the base station via a second link and releases the second link upon receiving confirmation that the uplink message has been received by the base station. In some implementations, the PP component may store the uplink message in a local queue until it can acquire the second link.

Particular implementations of the subject matter described in this disclosure can be implemented to realize one or more of the following potential advantages. ULE range extenders of the present implementations can reduce the power consumption of portable devices in a HAN by eliminating the need for end-to-end links to support communications between the portable devices and a base station. For example, by storing or buffering uplink messages locally on a ULE range extender, aspects of the present disclosure can release the wireless communication link with a portable device immediately after receiving an uplink message from the portable device. This allows the portable device to return to a low power state more quickly or otherwise reduce the number of transmission attempts for the same uplink message (compared communications with a DECT repeater). Thereafter, the ULE range extender can transmit the uplink message from its queue to the base station when a wireless communication link with the base station becomes available. Thus, the ULE range extender does not need to maintain links with the base station and the portable device, concurrently.

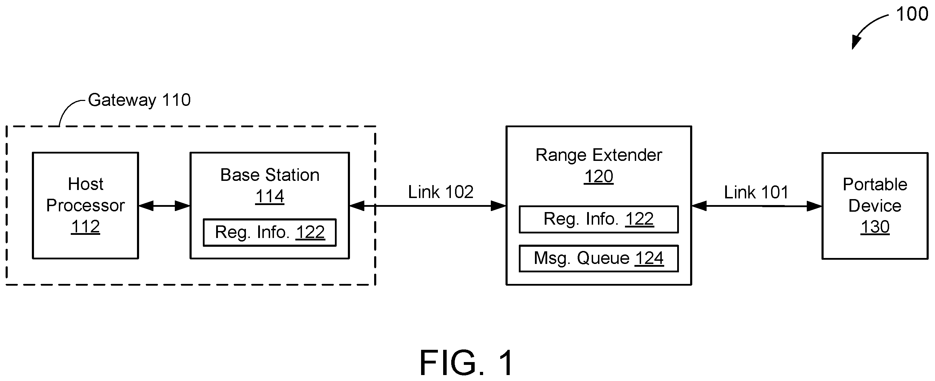

FIG. 1 shows a block diagram of an example wireless communication network 100, according to some implementations. In some aspects, the wireless communication network 100 may be one example of a home automation network (HAN). In such aspects, the network 100 may implement the digital enhanced cordless telecommunications (DECT) ultra low energy (ULE) wireless communication standard. The network 100 includes a gateway 110, a range extender 120, and a portable device 130. For simplicity, only one portable device 130 is shown in FIG. 1. In actual implementations, the network 100 may include multiple portable devices.

The gateway 110 includes a host processor 112 and a base station 114. The base station 114 (also referred to as a "root node") represents a DECT ULE fixed part (FP) of the network 100. More specifically, the base station 114 enables the host processor 112 to communicate with portable devices in the network 100 (such as the portable device 130) over a DECT air interface. For example, the base station 114 may receive uplink messages, via the DECT air interface, from one or more portable devices and provide the received messages to the host processor 112. The base station 114 also may transmit downlink messages, via the DECT air interface, to one or more portable devices on behalf of the host processor 112.

The portable device 130 (also referred to as a "leaf") represents a DECT ULE portable part (PP) of the network 100. As described above, a DECT ULE PP can be any portable device that is used in home automation, security, or climate control applications. Example suitable portable devices may include sensors (such as smoke detectors or motion detectors), thermostats, and electricity control elements, among other examples. The portable device 130 is registered with the base station 114, so that messages can be routed between the base station 114 and the portable device 130. In other words, the base station 114 stores registration information 122 that enables the portable device 130 to communicate with the base station 112 (and thus, the gateway 110) via the DECT air interface. For example, the portable device 130 may transmit and receive messages (also referred to as "information packets"), over the DECT air interface, carrying information associated with the corresponding application.

The range extender 120 is configured to extend the wireless range of the network 100 by forwarding communications between the portable device 130 and the base station 114 (such as when the portable device 130 is beyond the wireless communication range of the base station 114). For example, the portable device 130 may transmit uplink messages over a first wireless communication link 101 with the range extender 120, and the range extender 120 may retransmit the uplink messages over a second wireless communication link 102 with the base station 114. Alternatively, or additionally, the base station 114 may transmit downlink messages over the second wireless communication link 102, and the range extender 120 may retransmit the downlink messages to the portable device 130 over the first wireless communication link 101.

In some implementations, the range extender 120 may register the portable device 130 locally. In other words, the range extender 120 also may store the registration information 122 associated with the portable device 130. The registration information 122 may include any information that is used to register the portable device 130 with the base station 114 (so that messages can be routed between the base station 114 and the portable device 130). By storing such registration information 122 locally, the range extender 120 can serve the portable device 130 in a similar capacity as the base station 114. For example, the range extender 120 may route or otherwise process messages from the portable device 130 based on the registration information 122.

In some implementations, the range extender 120 may include a message queue 124 for storing or buffering uplink messages received from the portable device 130. For example, upon receiving an uplink message 130 from the portable device 130, the range extender 120 may store the uplink message in the message queue 124 until it can transmit the uplink message to the base station 114. This allows the range extender 120 to release the first wireless communication link 101 immediately after (or in response to) receiving the uplink message from the portable device 130. In some implementations, the range extender 120 may release the first wireless communication link 101 before acquiring the second wireless communication link 102. Thus, only one of the wireless communication links 101 or 102 may be active at any given time.

In contrast with existing DECT repeaters (also referred to as "wireless relay stations"), the range extender 120 can facilitate communications between the portable device 130 and the base station 114 without requiring end-to-end links. As a result, the portable device 130 can return to a low power state immediately after sending its message to the range extender 120 (rather than attempting to transmit the same message repeatedly until an end-to-end link is available). Thus, by locally registering the portable device 130 and buffering messages received therefrom, the range extender 120 can extend the wireless communication range of the network 100 (by up to 2500 meters in outdoor environments) while reducing the power consumption of the portable device 130 (by 200-400% compared to a DECT repeater).

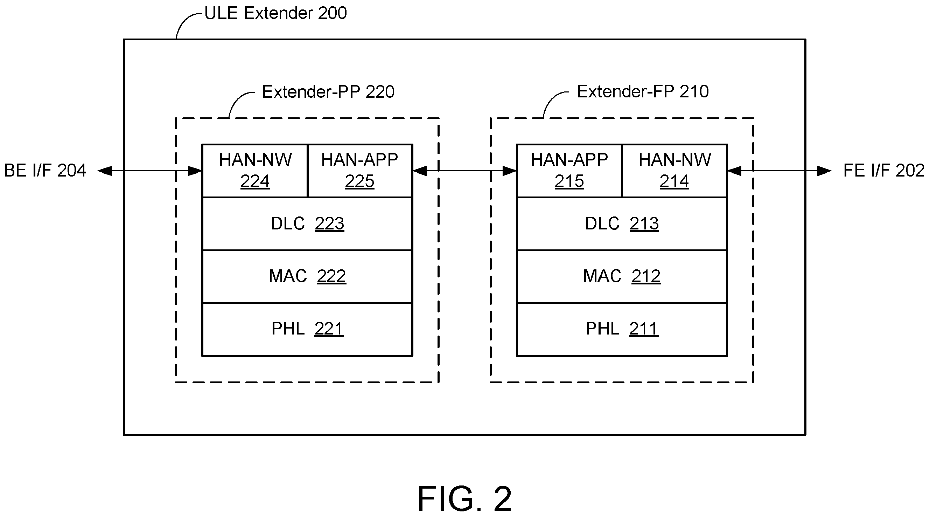

FIG. 2 shows a block diagram of an example DECT ULE range extender 200, according to some implementations. The DECT ULE range extender 200 (also referred to as a "ULE extender") is configured to extend the wireless communication range of a HAN by forwarding messages between a base station and one or more portable devices. In some implementations, the ULE extender 200 may be one example of the range extender 120 of FIG. 1.

The ULE extender 200 includes a fixed-part (FP) component 210 (also referred to as the "extender-FP") and a portable-part (PP) component 220 (also referred to as the "extender-PP"). In some implementations, the extender-FP 210 and the extender-PP 220 may be disposed on separate circuits or chips that are communicably coupled to one another via a wired link (such as any link conforming to the universal asynchronous receiver-transmitter (UART) communication protocols). In some other implementations, the extender-FP 210 and the extender-PP 220 may be disposed on the same circuit or chip.

The extender-FP 210 includes a physical layer (PHL) 211, a medium access control (MAC) layer 212, a data link control (DLC) layer 213, and a HAN layer that includes a network (HAN-NW) sublayer 214 and an application (HAN-APP) sublayer 215. The PHL 211, MAC layer 212, and DLC layer 213 may conform to existing PHL, MAC, and DLC layer protocols, respectively, defined by the DECT ULE standard. In some implementations, the HAN-NW layer 214 may transmit and receive HAN messages over a DECT air interface 202 according to existing HAN layer protocols. The DECT air interface 202 also may be referred to as a frontend DECT air interface (or "FE I/F"). In some implementations, the HAN-APP layer 215 may interface with the extender-PP 220 to route or otherwise process wireless communications through the HAN.

The extender-FP 210 is configured to communicate with portable devices, or other ULE extenders, over the frontend DECT air interface 202. In some aspects, the extender-FP 210 may operate as a DECT FP of the HAN. This allows the extender-FP 210 to serve the portable devices in the same or similar capacity as a base station. For example, in some implementations, the extender-FP 210 may store registration information associated with one or more portable devices (such as the registration information 122 of FIG. 1). In other words, a portable device may register with the extender-FP 210 as it would a base station or root node. As a result of registering a portable device, the extender-FP 210 may route uplink messages from, and downlink messages to, that portable device as if the extender-FP 210 were a base station.

The extender-PP 220 includes a PHL 221, a MAC layer 222, a DLC layer 223, and a HAN layer that includes a HAN-NW sublayer 224 and a HAN-APP sublayer 225. The PHL 221, MAC layer 222, and DLC layer 223 may conform to existing PHL, MAC, and DLC layer protocols, respectively, defined by the DECT ULE standard. In some implementations, the HAN-NW layer 224 may transmit and receive HAN messages over a DECT air interface 204 according to existing HAN layer protocols. The DECT air interface 204 also may be referred to as a backend DECT air interface (or "BE I/F"). In some implementations, the HAN-APP layer 225 may interface with the extender-FP 210 to route or otherwise process wireless communications through the HAN.

The extender-PP 220 is configured to communicate with a base station (also referred to herein as the "main base"), or other ULE extenders, over the backend DECT air interface 204. In some aspects, the extender-PP 220 may operate as a DECT PP of the HAN. This allows the extender-PP 220 to communicate with the main base as if it were a portable device. For example, in some implementations, the extender-PP 220 may store or buffer uplink messages intended for the main base (such as in the message queue 124 of FIG. 1). The uplink messages may originate from portable devices that are registered with the HAN. As such, the extender-PP 220 may attempt to transmit the messages from its message queue to the main base as if the extender-PP 220 were such portable devices.

In some aspects, the HAN-APP sublayer 225 of the extender-PP 220 may coordinate with the HAN-APP sublayer 215 of the extender-FP 210 (such as via UART) to manage a registration of portable devices. In some implementations, the HAN-APP sublayer 215 may pass registration information to the HAN-APP sublayer 225 when a portable device registers (or deregisters) with the extender-FP 210 so that the HAN-NW sublayer 224 can synchronize the device registration with the main base. In some other implementations, the HAN-NW sublayer 224 may receive registration information associated with a portable device (such as when a portable device registers or deregisters with the main base or other ULE extender). The HAN-APP sublayer 225 may pass such registration information to the HAN-APP sublayer 215 so that the HAN-NW sublayer 214 can locally register (or deregister) the portable device.

In some aspects, the HAN-APP sublayer 215 of the extender-FP 210 may coordinate with the HAN-APP sublayer 225 of the extender-FP 220 (such as via UART) to move portable devices to or from the ULE extender 200. In some implementations, the HAN-NW sublayer 224 may receive instructions from the main base indicating that the ULE extender 200 is to serve a portable device that is currently being served by the main base or another ULE extender. In some other implementations, the HAN-NW sublayer 224 may receive instructions from the main base indicating that the ULE extender 200 is to stop serving a particular portable device. The HAN-APP sublayer 225 may pass the instructions to the HAN-APP sublayer 215 so that the HAN-NW sublayer 214 can start or stop communicating with the portable device.

In some aspects, the HAN-APP sublayer 215 of the extender-FP 210 may coordinate with the HAN-APP sublayer 225 of the extender-PP 220 (such as via UART) to manage communications between the main base and one or more portable devices. In some implementations, the HAN-APP sublayer 215 may pass uplink messages received by the HAN-NW sublayer 214 to the HAN-APP sublayer 225 so that the HAN-NW sublayer 224 can retransmit the uplink messages over the backend DECT air interface 204. In some other implementations, the HAN-APP sublayer 225 may pass downlink messages received by the HAN-NW sublayer 224 to the HAN-APP sublayer 215 so that the HAN-NW sublayer 214 can retransmit the downlink messages over the frontend DECT air interface 202.

In some other aspects, the extender-FP 210 may directly route messages between multiple portable devices. For example, because the extender-FP 210 operates as a DECT FP (or base station) for any locally registered portable devices that are within wireless communication range, the extender-FP 210 can route messages between such devices based on the registration information stored therein (and without communicating with the extender-PP 220 or the main base). This allows faster routing of messages between portable devices in relatively close proximity.

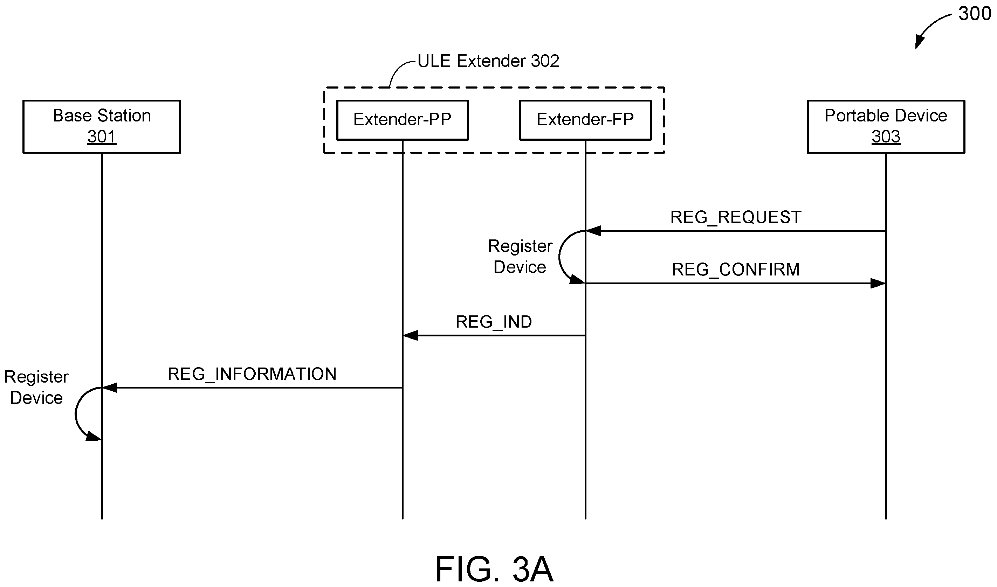

FIG. 3A shows a sequence diagram 300 depicting an example process for device registration in a HAN, according some implementations. The HAN includes a base station 301 (also referred to as the "main base") and a ULE extender 302. In some implementations, the HAN may be one example of the HAN 100 of FIG. 1. With reference to FIG. 1, the base station 301 may be one example of the base station 114 and the ULE extender 302 may be one example of the range extender 120.

The ULE extender 302 further includes an extender-FP and an extender-PP. In some implementations, the ULE extender 302 may be one example of the ULE extender 200 of FIG. 2. With reference to FIG. 2, the extender-FP may be one example of the extender-FP 210 and the extender-PP may be one example of the extender-PP 220. More specifically, the extender-FP may operate as a DECT FP configured to communicate with one or more portable devices, whereas the extender-PP may operate as a DECT PP configured to communicate with a base station.

In the example of FIG. 3A, a portable device 303 is attempting to join the HAN but is beyond the wireless communication range of the main base 301. Thus, the portable device 303 may transmit a registration request (REG_REQUEST) message to the ULE extender 302. The REG_REQUEST message may include registration information associated with the portable device 303.

The extender-FP receives the REG_REQUEST message and registers the portable device 303. For example, the extender-FP may store the registration information associated with the portable device 303 locally on the ULE extender 302. Upon completing the registration, the extender-FP may transmit a confirmation (REG_CONFIRM) message back to the portable device 303 indicating that the device has been successfully registered.

The extender-FP passes a registration indication (REG_IND) message to the extender-PP (such as via UART). The REG_IND message notifies the extender-PP that the portable device 303 is newly registered with the extender-FP. The extender-PP responds to the REG_IND message by fetching the registration information associated with the portable device 303 from the extender-FP and transmitting the registration information to the base station 301 in a corresponding registration information (REG_INFORMATION) message.

The base station 301 registers the portable device 303 based on the received REG_INFORMATION message. For example, the base station 301 may store a copy of the registration information associated with the portable device 303. As a result, the registration information for the portable device 303 is synchronized across the base station 301 and the ULE extender 302.

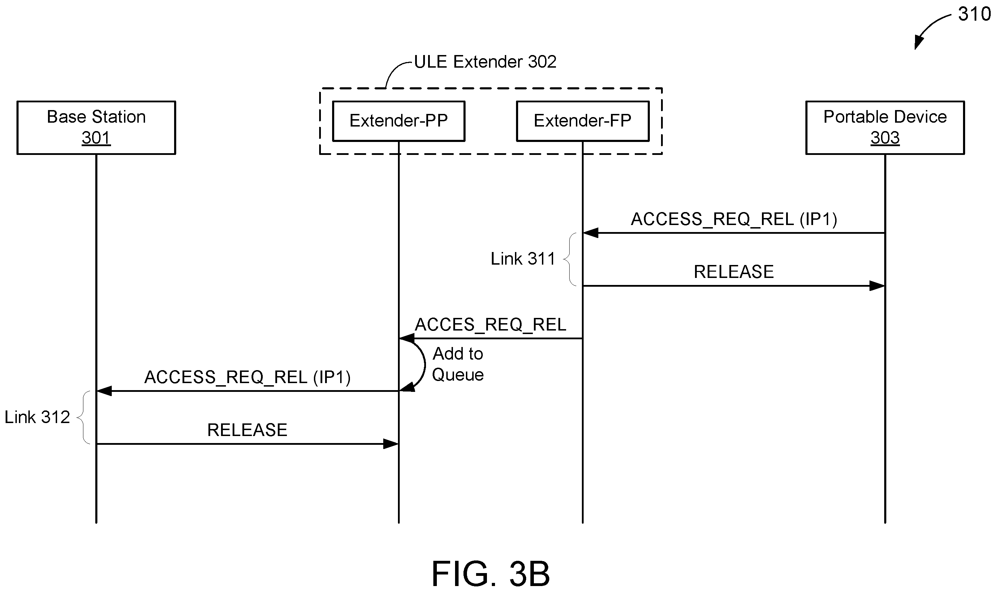

FIG. 3B shows a sequence diagram 310 depicting an example uplink communication in a HAN, according to some implementations. The HAN includes the base station 301, the ULE extender 302, and the portable device 303 of the FIG. 3A. In other words, the portable device 303 is already registered with the extender-FP of the ULE extender 302 as well as the base station 301 (such as described with reference to FIG. 3A).

In the example of FIG. 3B, the portable device 303 has an information packet (IP1) to send to the base station 301. The portable device 303 acquires or otherwise establishes a first wireless communication link 311 with the ULE extender 302 (or the extender-FP) and transmits, over the link 311, an access request and release (ACESS_REQ_REL) message having a B-field that carries the information packet IP1.

The extender-FP receives the ACCESS_REQ_REL message and immediately releases the link 311 with the portable device 303. For example, the extender-FP may transmit a release (RELEASE) message back to the portable device 303 in response to receiving the ACCESS_REQ_REL message. The portable device 303 knows that the ULE extender 302 successfully received the information packet IP1 based on the RELEASE message and may proceed to return to a low power state (or may otherwise stop attempting to transmit the information packet IP1).

The extender-FP passes the ACESS_REQ_REL message (including the information packet IP1) to the extender-PP. The extender-PP adds the ACCESS_REQ_REL message to a local queue (such as the message queue 124 of FIG. 1) while it attempts to acquire or otherwise establish a second wireless communication link 312 with the base station 301. Upon acquiring the link 312, the extender-PP transmits the ACESS_REQ_REL message from its local queue to the base station 301 (over the link 312). The extender-FP may remove the ACCESS_REQ_REL message from its local queue after transmitting the message to the base station 301.

The base station 301 receives the ACCESS_REQ_REL message and releases the link 312 with the ULE extender 302. For example, the base station 301 may transmit a RELEASE message back to the extender-PP in response to receiving the ACCES_REQ_REL message. Thus, as shown in FIG. 3B, only one of the wireless communication links 311 or 312 may be active at any given time. More specifically, the ULE extender 302 releases the link 311 with the portable device 303 before acquiring the link 312 with the base station 301.

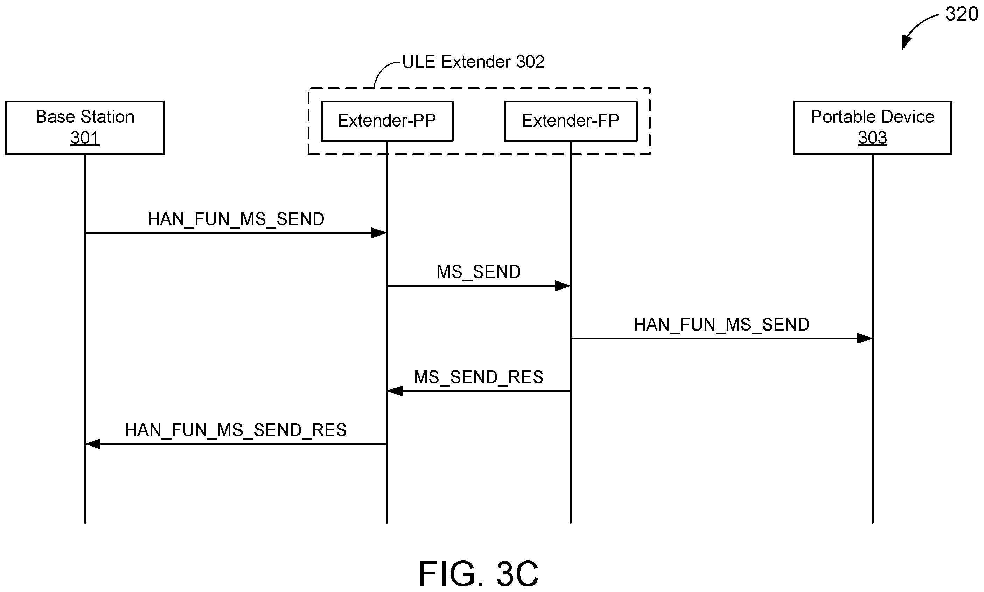

FIG. 3C shows a sequence diagram 320 depicting an example downlink communication in a HAN, according to some implementations. The HAN includes the base station 301, the ULE extender 302 (including the extender-PP and the extender-FP), and the portable device 303 of FIG. 3A. In other words, the portable device 303 is already registered with the extender-FP of the ULE extender 302 as well as the base station 301 (such as described with reference to FIG. 3A).

In the example of FIG. 3C, a host device (not shown for simplicity) associated with the base station 301 has a HAN functional (FUN) message to send to the portable device 303. Thus, the base station 301 transmits the HAN FUN message (HAN_FUN_MS_SEND) to the ULE extender 302.

The extender-PP receives the HAN FUN message from the base station 301 and forwards the message (MS_SEND) to the extender-FP. The extender-FP transmits the HAN_FUN message to the portable device 303 and provides a response (MS_SEND_RES) to the extender-PP indicating that the HAN FUN message has been transmitted to the portable device 303.

The extender-PP notifies the base station 301 that the HAN FUN message has been transmitted to the portable device 303 by transmitting a response message (HAN_FUN_MS_SEND_RES) to the base station 301 based on the response received from the extender-FP.

In some aspects, the wireless communication range of a HAN can be extended further by implementing multiple ULE extenders (such as in a daisy chain configuration). In other words, the extender-FP of a first ULE extender in a daisy chain may be configured to communicate with the extender-PP of a second ULE extender in the daisy chain. Because each ULE extender operates as both a DECT FP and a DECT PP, daisy chaining multiple ULE extenders between a portable device and a base station does not increase the overhead or power consumption of the portable device compared to the single ULE extender implementation (since the portable device does not require an end-to-end link to communicate with the base station). By contrast, daisy chaining multiple DECT repeaters between a portable device and a base station would significantly increase the power consumption and overhead of the portable device compared to a single-repeater implementation (since the portable device would require an end-to-end link to communicate with the base station).

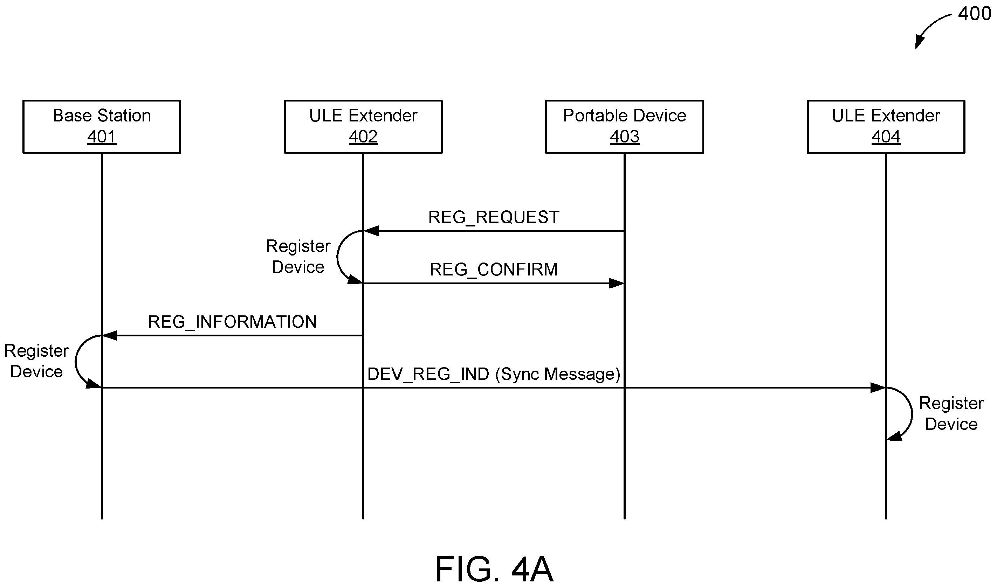

FIG. 4A shows another sequence diagram 400 depicting an example operation for device registration in a HAN, according to some implementations. The HAN includes a base station 401 (also referred to as the "main base") and a number of ULE extenders 402 and 404. Although two ULE extenders 402 and 404 are depicted in FIG. 4A, in actual implementations the HAN may include any number of ULE extenders. In some implementations, each of the ULE extenders 402 and 404 may be one example of the range extender 120 of FIG. 1 or the ULE extender 200 of FIG. 2. For example, each of the ULE extenders 402 and 404 may include a respective extender-FP and a respective extender-PP (not shown for simplicity). With reference to FIG. 1, the base station 401 may be one example of the base station 114.

In the example of FIG. 4A, a portable device 403 is attempting to join the HAN but is beyond the wireless communication range of the main base 401. Thus, the portable device 403 may transmit a registration request (REG_REQUEST) message to one of the ULE extenders 402 or 404. In some implementations, the portable device 403 may transmit the REG_REQUEST message to the nearest ULE extender. As shown in FIG. 4A, the portable device 403 transmits the REG_REQUEST message to the ULE extender 402. The REG_REQUEST message may include registration information associated with the portable device 403.

The ULE extender 402 registers the portable device 403 based on the received REG_REQUEST message. For example, the ULE extender 402 may store the registration information associated with the portable device 403. Upon completing the registration, the ULE extender 402 may transmit a confirmation (REG_CONFIRM) message back to the portable device 403 indicating that the device has been successfully registered.

The ULE extender 402 further transmits the registration information associated with the portable device 403 to the base station 401 in a corresponding registration information (REG_INFORMATION) message. The base station 401 registers the portable device 403 based on the received REG_INFORMATION message. For example, the base station 401 may store a copy of the registration information associated with the portable device 403.

The base station 401 further transmits a HAN FUN message (DEV_REG_IND) to the ULE extender 404 indicating that a new portable device has been registered with the HAN. For example, the DEV_REG_IND message may be used to synchronize the registration of the portable device 403 across all of the ULE extenders 402 and 404. Thus, in some implementations, the REG_DEV_IND message also may carry the registration information associated with the portable device 403.

The ULE extender 404 registers the portable device 403 based on the received DEV_REG_IND message. For example, the extender-PP of the ULE extender 404 may pass the DEV_REG_IND message to the extender-FP of the ULE extender 404, and the extender-FP may store the registration information associated with the portable device 403 locally on the ULE extender 404. As a result, the registration information for the portable device 403 is synchronized across the base station 401 and the ULE extenders 402 and 404.

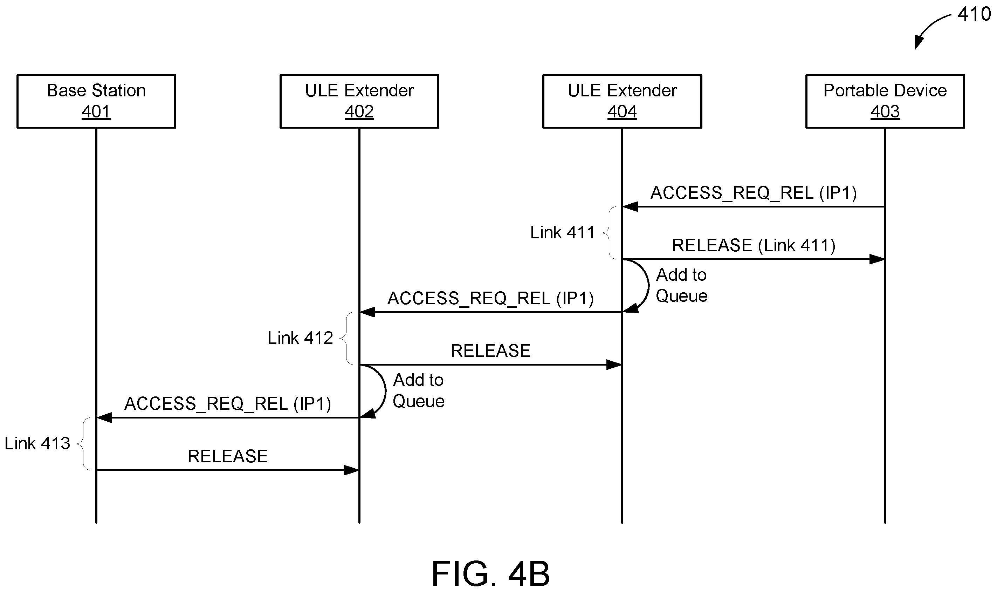

FIG. 4B shows another sequence diagram 410 depicting an example uplink communication in a HAN, according to some implementations. The HAN includes the base station 401, the ULE extenders 402 and 404, and the portable device 403 of FIG. 4A. In other words, the portable device 403 is already registered with the ULE extenders 402 and 404 as well as the base station 401 (such as described with reference to FIG. 4A).

In the example of FIG. 4B, the portable device 403 is currently behind (or nearest to) the ULE extender 404 and has an information packet (IP1) to send to the base station 401. Thus, the portable device 403 acquires or otherwise establishes a first wireless communication link 411 with the ULE extender 404 and transmits, over the link 411, an access request and release (ACCES_REQ_REL) message having a B-field that carries the information packet IP1.

The ULE extender 404 releases the link 411 with the portable device 403 in response to receiving the ACCESS_REQ_REL message, for example, by transmitting a release (RELEASE) message back to the portable device 403. The portable device 403 knows that the ULE extender 404 successfully received the information packet IP1 based on the RELEASE message and may proceed to return to a low power state (or may otherwise stop attempting to transmit the information packet IP1).

The ULE extender 404 adds the ACCESS_REQ_REL message to a local queue while it attempts to acquire or otherwise establish a second wireless communication link 412 with the ULE extender 402. Upon acquiring the link 412, the ULE extender 404 transmits the ACCESS_REQ_REL message from its local queue to the ULE extender 402 (over the link 412). The ULE extender 404 may remove the ACCESS_REQ_REL message from its local queue after transmitting the message to the ULE extender 402.

The ULE extender 402 releases the link 412 with the ULE extender 404 in response to receiving the ACCESS_REQ_REL message, for example, by transmitting a RELEASE message back to the ULE extender 404. The ULE extender 402 further adds the ACCESS_REQ_REL message to a local queue while it attempts to acquire or otherwise establish a third wireless communication link 413 with the base station 401. Upon acquiring the link 413, the ULE extender 402 transmits the ACCESS_REQ_REL message from its local queue to the base station 401 (over the link 413). The ULE extender 402 may remove the ACCESS_REQ_REL message from its local queue after transmitting the message to the base station 401.

The base station 401 releases the link 413 with the ULE extender 402 in response to receiving the ACCESS_REQ_REL message, for example, by transmitting a RELEASE message back to the ULE extender 402. Thus, as shown in FIG. 4B, only one of the wireless communication links 411, 412, or 413 may be active at any given time. More specifically, the ULE extender 404 releases the link 411 with the portable device 403 before acquiring the link 412 with the ULE extender 402, and the ULE extender 402 releases the link 412 with the ULE extender 404 before acquiring the link 413 with the base station 401.

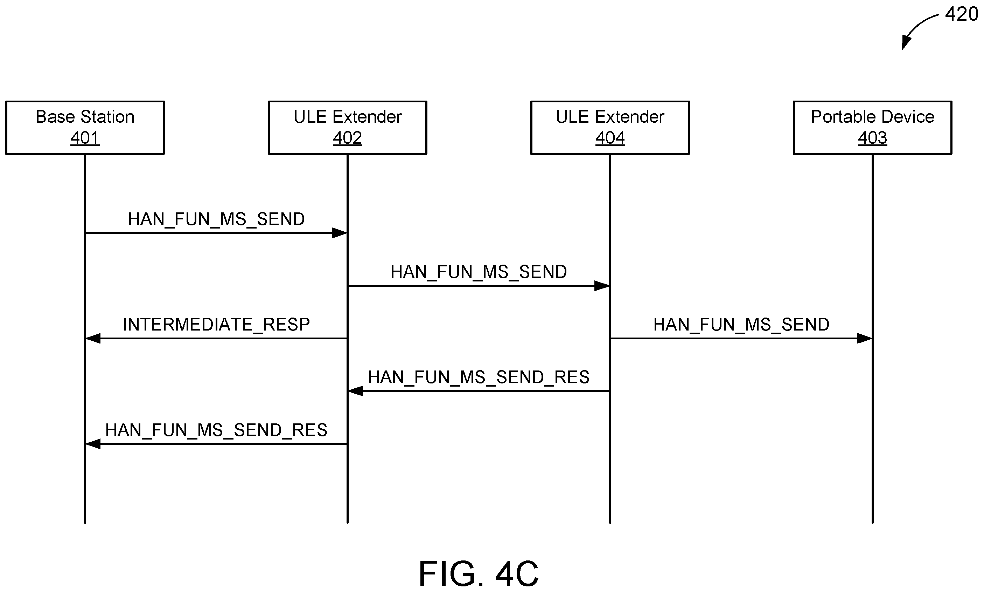

FIG. 4C shows another sequence diagram 420 depicting an example downlink communication in a HAN, according to some implementations. The HAN includes the base station 401, the ULE extender 402 and 404, and the portable device 403 of FIG. 4A. In other words, the portable device 403 is already registered with the ULE extenders 402 and 404 as well as the base station 401 (such as described with reference to FIG. 4A).

In the example of FIG. 4C, the portable device 403 is currently behind (or nearest to) the ULE extender 404 and a host device (not shown for simplicity) has a HAN FUN message to send to the portable device 403. Thus, the base station 401 transmits the HAN FUN message (HAN_FUN_MS_SEND) to the ULE extender 402.

The ULE extender 402 further transmits the HAN FUN message to the ULE extender 404 and also transmits an intermediate response message (INTERMEDIATE_RESP) back to the base station 401 indicating that the HAN FUN message was transmitted to another ULE extender. For example, the intermediate response message may indicate the progress of the HAN FUN message as it passes through the daisy chain of ULE extenders.

The ULE extender 404 further transmits the HAN FUN message to the portable device 403 and also transmits a final response message (HAN_FUN_MS_SEND_RES) back to the ULE extender 402 indicating that the HAN FUN message was transmitted to the portable device 403. The ULE extender 402 further transmits the final response message back to the base station 401 to notify the base station 401 that the HAN FUN message has reached its destination.

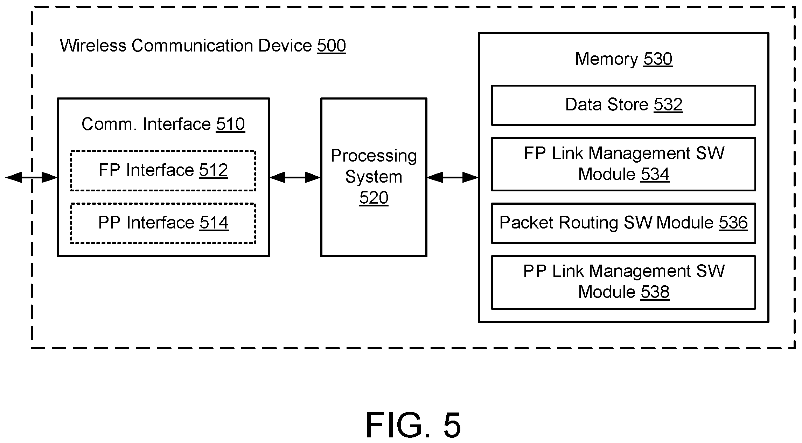

FIG. 5 shows a block diagram of an example wireless communication device 500, according to some implementations. The wireless communication device 500 is configured to extend the wireless communication range of a HAN. In some implementations, the wireless communication device 500 may be one example of the range extender 120 of FIG. 1 or the ULE extender 200 of FIG. 2.

The wireless communication device 500 includes a communication interface 510, a processing system 520, and a memory 530. The communication interface 510 is configured to communicate with one or more devices in the HAN. In some aspects, the communication interface 510 may include a fixed part (FP) interface 512 to communicate with one or more portable devices (or ULE extenders) and a portable part (PP) interface 514 to communicate with a base station (or other ULE extenders).

The memory 530 may include a data store 532 to store any data needed to facilitate communications between a base station and a portable device. In some implementations, the data store 532 may be configured to store registration information associated with one or more portable devices. In some other implementations, the data store 532 may be configured to store or buffer information packets (or uplink messages) received from one or more portable devices.

The memory 530 also may include a non-transitory computer-readable medium (including one or more nonvolatile memory elements, such as EPROM, EEPROM, Flash memory, or a hard drive, among other examples) that may store at least the following software (SW) modules:
- an FP link management SW module 534 to receive a first packet for a base station via a first link and release the first link responsive to receiving the first packet;
- a packet routing SW module 536 to transmit the first packet to the base station via a second link; and
- a PP link management SW module 538 to receive confirmation of the first packet by the base station and release the second link responsive to receiving the confirmation.
Each software module includes instructions that, when executed by the processing system 520, causes the wireless communication device 500 to perform the corresponding functions.

The processing system 520 may include any suitable one or more processors capable of executing scripts or instructions of one or more software programs stored in the wireless communication device 500 (such as in the memory 530). For example, the processing system 520 may execute the FP link management SW module 534 to receive a first packet for a base station via a first link and release the first link responsive to receiving the first packet. The processing system 520 also may execute the packet routing SW module 536 to transmit the first packet to the base station via a second link. Further, the processing system 520 may execute the PP link management SW module 538 to receive confirmation of the first packet by the base station and release the second link responsive to receiving the confirmation.

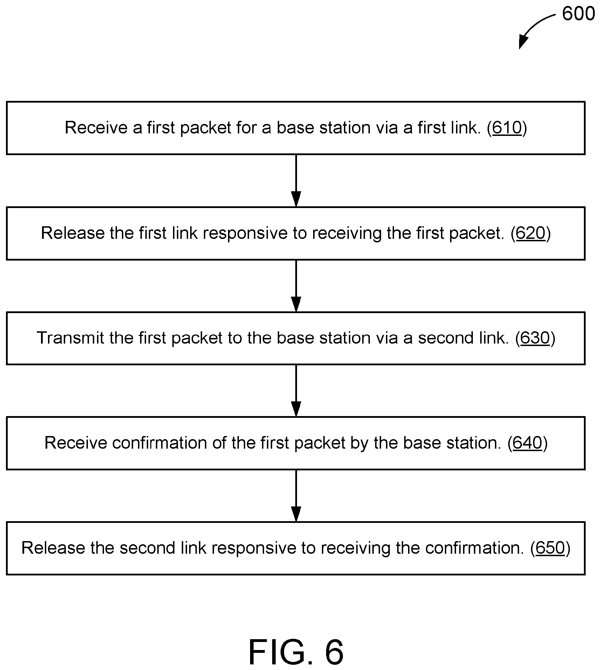

FIG. 6 shows an illustrative flowchart depicting an example operation 600 for wireless communications, according to some implementations. In some implementations, the example operation 600 may be performed by a wireless communication device such as the range extender 120 of FIG. 1, the ULE extender 200 of FIG. 2, or the wireless communication device 500 of FIG. 5.

The wireless communication device receives a first packet for a base station via a first link (610). The wireless communication device releases the first link responsive to receiving the first packet (620). The wireless communication device transmits the first packet to the base station via a second link (630). The wireless communication device receives confirmation of the packet by the base station (640). The wireless communication device releases the second link responsive to receiving the confirmation (650).

In some aspects, the base station may represent a DECT ULE FP of a HAN. In some implementations, the wireless communication device may be a range extender operating as a DECT ULE FP and a DECT ULE PP in the HAN. In some implementations, the first packet may be received from a range extender operating as a DECT ULE FP and a DECT ULE PP in the HAN.

In some other implementations, the first packet may be received from a portable device representing a DECT ULE PP of the HAN. In some implementations, the wireless communication device may further receive registration information associated with the portable device and establish the first link with the portable device based on the received registration information.

In some aspects, the registration information may be received from the portable device and the wireless communication device may further transmit the registration information to the base station. In some other aspects, the registration information may be received from the base station. In some implementations, the registration information may be carried in one or more HAN FUN messages.

In some implementations, the transmitting of the first packet to the base station may include establishing the second link with the base station and storing the first packet in a local queue of the wireless communication device prior to establishing the second link. In some implementations, the first link may be released prior to transmitting the first packet to the base station.

In some implementations, the wireless communication device may further receive a second packet for a portable device via a third link, release the third link responsive to receiving the second packet, establish a fourth link with the portable device, and transmit the second packet to the portable device via the fourth link.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, embodiments have been described with reference to specific examples thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

## Claims

1. A method for wireless communication performed by a wireless communication device (120), comprising:
receiving a first packet for a base station (114) via a first link (101);
releasing the first link responsive to receiving the first packet;
transmitting the first packet to the base station via a second link (102);
receiving confirmation of the first packet by the base station; and
releasing the second link responsive to receiving the confirmation;
**characterized in that** the first link is released prior to transmitting the first packet to the base station.

2. The method of claim 1, wherein the base station represents a digital enhanced cordless telecommunications, DECT, ultra low energy, ULE, fixed part, FP, of a home automation network, HAN.

3. The method of claim 2, wherein the wireless communication device comprises a range extender (120) operating as a DECT ULE FP and a DECT ULE PP in the HAN.

4. The method of claim 2, wherein the first packet is received from a portable device (130) representing a DECT ULE portable part, PP, of the HAN.

5. The method of claim 4, further comprising:
receiving registration information associated with the portable device; and
establishing the first link with the portable device based on the received registration information.

6. The method of claim 5, wherein the registration information is received from the portable device, the method further comprising:
transmitting the registration information to the base station.

7. The method of claim 5, wherein the registration information is received from the base station;
wherein, optionally, the registration information is carried in one or more HAN functional, FUN, messages.

8. The method of claim 2, wherein the first packet is received from a range extender operating as a DECT ULE FP and a DECT ULE PP in the HAN.

9. The method of claim 1, wherein the transmitting of the first packet to the base station comprises:
establishing the second link with the base station; and
storing the first packet in a local queue of the wireless communication device prior to establishing the second link.

10. The method of claim 1, wherein the method further comprises receiving a second packet for a portable device via a third link; releasing the third link responsive to receiving the second packet; establishing a fourth link with the portable device; and transmitting the second packet to the portable device via the fourth link.

11. A wireless communication device (500) comprising:
a processing system (520); and
a memory (530) storing instructions that, when executed by the processing system, cause the wireless communication device to:
receive a first packet for a base station (114) via a first link (101);
release the first link responsive to receiving the first packet;
transmit the first packet to the base station via a second link (102);
receive confirmation of the first packet by the base station; and
release the second link responsive to receiving the confirmation;
**characterized in that** execution of the instructions further causes the wireless communication device to release the first link prior to transmitting the first packet to the base station.

12. The wireless communication device of claim 11, wherein the base station represents a digital enhanced cordless telecommunications, DECT, ultra low energy, ULE, fixed part, FP, of a home automation network, HAN;
wherein, optionally, the wireless communication device comprises a range extender operating as a DECT ULE FP and a DECT ULE PP in the HAN.

13. The wireless communication device of claim 12, wherein the first packet is received from a portable device (130) representing a DECT ULE portable part, PP, of the HAN;
wherein, optionally, execution of the instructions further causes the wireless communication device to receive registration information associated with the portable device; and establish the first link with the portable device based on the received registration information.

14. The wireless communication device of claim 12, wherein the first packet is received from a range extender (120) operating as a DECT ULE FP and a DECT ULE PP in the HAN.

15. The wireless communication device of claim 11, wherein execution of the instructions further causes the wireless communication device to receive a second packet for a portable device via a third link; release the third link responsive to receiving the second packet; establish a fourth link with the portable device; and transmit the second packet to the portable device via the fourth link.

## Patentansprüche

1. Verfahren zur drahtlosen Kommunikation, das von einer drahtlosen Kommunikationsvorrichtung (120) durchgeführt wird und Folgendes umfasst:
Empfangen eines ersten Pakets für eine Basisstation (114) über eine erste Verbindung (101);
Freigeben der ersten Verbindung als Reaktion auf den Empfang des ersten Pakets;
Senden des ersten Pakets an die Basisstation über eine zweite Verbindung (102);
Empfangen einer Bestätigung des ersten Pakets durch die Basisstation; und
Freigeben der zweiten Verbindung als Reaktion auf den Empfang der Bestätigung;
**dadurch gekennzeichnet, dass** die erste Verbindung vor dem Senden des ersten Pakets an die Basisstation freigegeben wird.

2. Verfahren nach Anspruch 1, wobei die Basisstation einen DECT-ULE-FP-Teil (Digital Enhanced Cordless Telecommunications, Ultra Low Energy, Fixed Part) eines HAN (Home Automation Network) darstellt.

3. Verfahren nach Anspruch 2, wobei die drahtlose Kommunikationsvorrichtung einen Reichweitenverstärker (120) umfasst, der als DECT-ULE-FP und als DECT-ULE-PP im HAN fungiert.

4. Verfahren nach Anspruch 2, wobei das erste Paket von einer tragbaren Vorrichtung (130) empfangen wird, die einen DECT-ULE-PP des HAN darstellt.

5. Verfahren nach Anspruch 4, das ferner umfasst:
Empfangen von Registrierungsinformationen, die der tragbaren Vorrichtung zugeordnet sind; und
Herstellen der ersten Verbindung mit der tragbaren Vorrichtung basierend auf den empfangenen Registrierungsinformationen.

6. Verfahren nach Anspruch 5, wobei die Registrierungsinformationen von der tragbaren Vorrichtung empfangen werden, wobei das Verfahren ferner umfasst:
Senden der Registrierungsinformationen an die Basisstation.

7. Verfahren nach Anspruch 5, wobei die Registrierungsinformationen von der Basis empfangen werden;
wobei die Registrierungsinformationen optional in einer oder mehreren HAN-Funktions- (FUN) Nachrichten übertragen werden.

8. Verfahren nach Anspruch 2, wobei das erste Paket von einem Reichweitenverstärker empfangen wird, der als DECT-ULE-FP und als DECT-ULE-PP im HAN arbeitet.

9. Verfahren nach Anspruch 1, wobei das Senden des ersten Pakets an die Basisstation umfasst:
Herstellen der zweiten Verbindung mit der Basisstation; und
Speichern des ersten Pakets in einer lokalen Warteschlange der drahtlosen Kommunikationsvorrichtung vor dem Herstellen der zweiten Verbindung.

10. Verfahren nach Anspruch 1, wobei das Verfahren ferner umfasst: Empfangen eines zweiten Pakets für eine tragbare Vorrichtung über eine dritte Verbindung; Freigeben der dritten Verbindung als Reaktion auf den Empfang des zweiten Pakets; Herstellen einer vierten Verbindung mit der tragbaren Vorrichtung; und Senden des zweiten Pakets an die tragbare Vorrichtung über die vierte Verbindung.

11. Drahtlose Kommunikationsvorrichtung (500), die umfasst:
ein Verarbeitungssystem (520); und
einen Speicher (530), der Befehle speichert, die, wenn sie vom Verarbeitungssystem ausgeführt werden, bewirken, dass die drahtlose Kommunikationsvorrichtung Folgendes ausführt:
Empfangen eines ersten Pakets für eine Basisstation (114) über eine erste Verbindung (101);
Freigeben der ersten Verbindung als Reaktion auf den Empfang des ersten Pakets;
Senden des ersten Pakets an die Basisstation über eine zweite Verbindung (102);
Empfangen einer Bestätigung des ersten Pakets durch die Basisstation; und
Freigeben der zweiten Verbindung als Reaktion auf den Empfang der Bestätigung;
**dadurch gekennzeichnet, dass** die Ausführung der Befehle die drahtlose Kommunikationsvorrichtung ferner veranlasst, die erste Verbindung vor dem Senden des ersten Pakets an die Basisstation freizugeben.

12. Drahtlose Kommunikationsvorrichtung nach Anspruch 11, wobei die Basisstation einen DECT-ULE-FP-Teil (Digital Enhanced Cordless Telecommunications, Ultra Low Energy, Fixed Part) eines HAN (Home Automation Network) darstellt; wobei die drahtlose Kommunikationsvorrichtung einen Reichweitenverstärker (120) umfasst, der als DECT-ULE-FP und als DECT-ULE-PP im HAN fungiert.

13. Drahtlose Kommunikationsvorrichtung nach Anspruch 12, wobei das erste Paket von einer tragbaren Vorrichtung (130) empfangen wird, die einen DECT-ULE-PP des HAN darstellt;
wobei die Ausführung der Befehle optional ferner bewirkt, dass die drahtlose Kommunikationsvorrichtung Registrierungsinformationen empfängt, die der tragbaren Vorrichtung zugeordnet sind; und die erste Verbindung mit der tragbaren Vorrichtung basierend auf den empfangenen Registrierungsinformationen herstellt.

14. Drahtlose Kommunikationsvorrichtung nach Anspruch 12, wobei das erste Paket von einem Reichweitenverstärker (120) empfangen wird, der als DECT-ULE-FP und als DECT-ULE-PP im HAN arbeitet.

15. Drahtlose Kommunikationsvorrichtung nach Anspruch 11, wobei die Ausführung der Befehle ferner bewirkt, dass die drahtlose Kommunikationsvorrichtung Folgendes ausführt: Empfangen eines zweiten Pakets für eine tragbare Vorrichtung über eine dritte Verbindung; Freigeben der dritten Verbindung als Reaktion auf den Empfang des zweiten Pakets; Herstellen einer vierten Verbindung mit dem tragbaren Vorrichtung; und Senden des zweiten Pakets an das tragbare Vorrichtung über die vierte Verbindung.

## Revendications

1. Procédé pour communication sans fil réalisé par un dispositif de communication sans fil (120), comprenant :
la réception d'un premier paquet pour une station de base (114) par l'intermédiaire d'une première liaison (101) ;
la libération de la première liaison en réponse à la réception du premier paquet ;
la transmission du premier paquet à la station de base par l'intermédiaire d'une deuxième liaison (102) ;
la réception de confirmation du premier paquet par la station de base ; et
la libération de la deuxième liaison en réponse à la réception de la confirmation ;
**caractérisé en ce que** la première liaison est libérée avant la transmission du premier paquet à la station de base.

2. Procédé de la revendication 1, dans lequel la station de base représente une partie fixe, Fixed Part FP, à ultra-basse énergie, Ultra Low Energy ULE, de télécommunications sans fil numériques améliorées, Digital Enhanced Cordless Telecommunications DECT, d'un réseau d'automatisation domestique, Home Automation Network HAN.

3. Procédé de la revendication 2, dans lequel le dispositif de communication sans fil comprend un prolongateur de portée (120) fonctionnant en tant que FP à ULE de DECT et que PP à ULE de DECT dans le HAN.

4. Procédé de la revendication 2, dans lequel le premier paquet est reçu en provenance d'un dispositif portatif (130) représentant une partie portative, Portable Part PP, à ULE de DECT du HAN.

5. Procédé de la revendication 4, comprenant en outre :
la réception d'informations d'enregistrement associées au dispositif portatif ; et
l'établissement de la première liaison avec le dispositif portatif sur la base des informations d'enregistrement reçues.

6. Procédé de la revendication 5, dans lequel les informations d'enregistrement sont reçues en provenance du dispositif portatif, le procédé comprenant en outre :
la transmission des informations d'enregistrement à la station de base.

7. Procédé de la revendication 5, dans lequel les informations d'enregistrement sont reçues en provenance de la station de base ;
dans lequel, facultativement, les informations d'enregistrement sont portées dans un ou plusieurs messages fonctionnels, FUN, de HAN.

8. Procédé de la revendication 2, dans lequel le premier paquet est reçu en provenance d'un prolongateur de portée fonctionnant en tant que FP à ULE de DECT et que PP à ULE de DECT dans le HAN.

9. Procédé de la revendication 1, dans lequel la transmission du premier paquet à la station de base comprend :
l'établissement de la deuxième liaison avec la station de base ; et
le stockage du premier paquet dans une file d'attente locale du dispositif de communication sans fil avant l'établissement de la deuxième liaison.

10. Procédé de la revendication 1, dans lequel le procédé comprend en outre la réception d'un second paquet pour un dispositif portatif par l'intermédiaire d'une troisième liaison ; la libération de la troisième liaison en réponse à la réception du second paquet ; l'établissement d'une quatrième liaison avec le dispositif portatif ; et la transmission du second paquet au dispositif portatif par l'intermédiaire de la quatrième liaison.

11. Dispositif de communication sans fil (500), comprenant :
un système de traitement (520) ; et
une mémoire (530) stockant des instructions qui, lorsqu'elles sont exécutées par le système de traitement, amènent le dispositif de communication sans fil :
à recevoir un premier paquet pour une station de base (114) par l'intermédiaire d'une première liaison (101) ;
à libérer la première liaison en réponse à la réception du premier paquet ;
à transmettre le premier paquet à la station de base par l'intermédiaire d'une deuxième liaison (102) ;
à recevoir une confirmation du premier paquet par la station de base ; et
à libérer la deuxième liaison en réponse à la réception de la confirmation ;
**caractérisé en ce que** l'exécution des instructions amène en outre le dispositif de communication sans fil à libérer la première liaison avant de transmettre le premier paquet à la station de base.

12. Dispositif de communication sans fil de la revendication 11, dans lequel la station de base représente une partie fixe, Fixed Part FP, à ultra-basse énergie, Ultra Low Energy ULE, de télécommunications sans fil numériques améliorées, Digital Enhanced Cordless Telecommunications DECT, d'un réseau d'automatisation domestique, Home Automation Network HAN ;
dans lequel, facultativement, le dispositif de communication sans fil comprend un prolongateur de portée fonctionnant en tant que FP à ULE de DECT et que PP à ULE de DECT dans le HAN.

13. Dispositif de communication sans fil de la revendication 12, dans lequel le premier paquet est reçu en provenance d'un dispositif portatif (130) représentant une partie portative, Portable Part PP, à ULE de DECT du HAN ;
dans lequel, facultativement, l'exécution des instructions amène en outre le dispositif de communication sans fil à recevoir des informations d'enregistrement associées au dispositif portatif ; et à établir la première liaison avec le dispositif portatif sur la base des informations d'enregistrement reçues.

14. Dispositif de communication sans fil de la revendication 12, dans lequel le premier paquet est reçu en provenance d'un prolongateur de portée (120) fonctionnant en tant que FP à ULE de DECT et que PP à ULE de DECT dans le HAN.

15. Dispositif de communication sans fil de la revendication 11, dans lequel l'exécution des instructions amène en outre le dispositif de communication sans fil à recevoir un second paquet pour un dispositif portatif par l'intermédiaire d'une troisième liaison ; à libérer la troisième liaison en réponse à la réception du second paquet ; à établir une quatrième liaison avec le dispositif portatif ; et à transmettre le second paquet au dispositif portatif par l'intermédiaire de la quatrième liaison.
